# EUROPÄISCHE PATENTSCHRIFT

(11) **EP 1 988 513 B1**
(45) Veröffentlichungstag und Bekanntmachung des Hinweises auf die Patenterteilung: **15.12.2010**
(21) Anmeldenummer: 07008781.2
(22) Anmeldetag: 30.04.2007
(51) Int. Cl.: G07C 9/00, B60R 25/00

(54) **Komfort- und Zugangskontrollsystem**
Comfort and access control systems
Système de contrôle du confort et d'entrée

(43) Veröffentlichungstag der Anmeldung: 05.11.2008
(73) Patentinhaber: Delphi Technologies, Inc., Troy, Michigan 48007 (US)
(72) Erfinder: Hildebrand, Carsten, 42115 Wuppertal (DE); Ioffe, Alexander, 53229 Bonn (DE); Baydoun, Hussein, 51647 Gummersbach (DE)
(74) Vertreter: Denton, Michael John

(56) Entgegenhaltungen:
- DE-A1- 10 032 936
- DE-A1- 10 317 658
- DE-A1- 19 941 351
- DE-C1- 19 738 323

## Beschreibung

Die Erfindung betrifft ein Komfort- und Zugangskontrollsystem der im Oberbegriff des Anspruchs 1 angegebenen Art. Ein derartiges System ist in der DE 103 17 658 A1 beschrieben.

Ein solches Komfort- und Zugangskontrollsystem kommt beispielsweise dort zum Einsatz, wo es um die Überprüfung geht, ob eine jeweilige Person als Inhaber einer jeweiligen Identifikationseinrichtung autorisiert ist, die betreffende Zugangskontrolleinrichtung zu passieren. Dies kann sowohl für ortsfeste Zugangskontrolleinrichtungen, zu denen nur ein ausgewählter Personenkreis Zutritt hat, als auch für mobile Zugangskontrolleinrichtungen, insbesondere bei Fahrzeugen, wie z.B. Kraftfahrzeugen, Schiffen oder Fahrrädern, gelten. Mit den betreffenden Zugangskontrolleinrichtungen soll hier insbesondere einem Diebstahl des betreffenden Fahrzeuges entgegengewirkt werden.

Das jeweilige Komfort- und Zugangskontrollsystem kann insbesondere auch als so genanntes schlüsselloses Zugangssystem und/oder schlüsselloses Startsystem für Fahrzeuge vorgesehen sein. Es umfasst in diesem Fall als zugangsseitige Steuereinrichtung ein dem Fahrzeug zugeordnetes elektronisches Steuergerät, welches in der Regel dauerhaft mit Energie versorgt ist, und wenigstens eine mobile Identifikationseinrichtung, die einen jeweiligen autorisierten Benutzer identifizieren soll. Dabei kann eine jeweilige Identifikationseinrichtung selbst Teil eines Fahrzeugschlüssels sein, der mit der Steuereinrichtung im Bereich der Schließ- und/oder Startanlage des Fahrzeuges in vorzugsweise bidirektionalem Datenaustausch steht. Die jeweiligen Identifikationseinrichtungen können insbesondere auch in Chipkarten oder dergleichen integriert und beispielsweise als Transponder ausgeführt sein. Transponder weisen keine eigene Energieversorgung auf, sie werden vielmehr bei einer Annäherung der Identifikationseinrichtung an die Steuereinrichtung drahtlos mit Energie versorgt und im Weiteren automatisch zur Übertragung der Authentisierungsantwortsignale angesprochen.

Bei den derzeit üblichen Komfort- und Zugangskontrollsystemen der eingangs genannten Art sind zur Ortung der Identifikationseinrichtung innerhalb oder außerhalb des kontrollierten Zugangsbereiches, d.h. beispielsweise innerhalb oder außerhalb eines Fahrzeuges, zumindest drei Antennen vorgesehen, die sich deutlich voneinander unterscheidende Magnetfelder erzeugen, wobei sich die unterschiedlichen Magnetfelder durch die unterschiedliche Positionierung der Antennen beispielsweise innerhalb bzw. außerhalb eines Fahrzeuges ergeben. Zur Ortung einer Identifikationseinrichtung innerhalb des Fahrzeuges und/oder zur Erkennung eines Zugriffs auf eine Fahrzeugtür durch eine Person wird normalerweise die Magnetfeldform herangezogen, unterstützt durch eine Berechnung der Beziehungen zwischen den RSSI-Werten von verschiedenen Antennen an solchen Positionen, an denen die Magnetfeldform nicht mit dem Umriss des Fahrzeuges übereinstimmt. "RSSI" ist die Abkürzung für "Received Signal Strength Indication" und stellt einen Indikator für die Empfangsfeldstärke kabelloser Kommunikationsanwendungen dar.

Das aus der DE 103 17 658 A1 bekannte Komfort- und Zugangskontrollsystem umfasst mehrere innerhalb eines Kraftfahrzeugs angeordnete Antennen, über die ermittelt wird, ob sich die Identifikationseinrichtung innerhalb oder außerhalb des Fahrzeugs befindet. Dabei wird beispielsweise ein Verriegeln des Fahrzeugs dann verhindert, wenn festgestellt wurde, dass sich die Identifikationseinrichtung innerhalb des Fahrzeugs befindet.

Bei einem aus der DE 100 32 936 A1 bekannten Zugangskontrollsystem enthalten die von den kraftfahrzeugseitigen Antennen ausgesandten Fragesignale jeweils eine für die jeweilige Antenne charakteristische Kennung. Die Identifikationseinrichtung liefert ein Antwortsignal, dem zusammen mit der empfangenen Kennung ein der gemessenen Leistung des empfangenen Fragesignals entsprechender Wert hinzugefügt wird. Mit den in den Antwortsignalen enthaltenen Informationen kann fahrzeugseitig die Position der Identifikationseinrichtung festgestellt werden, wobei es auch hier in erster Linie wieder darum geht, zuverlässig zwischen einer Position außerhalb und einer Position innerhalb des Fahrzeugs zu unterscheiden.

In der DE 197 38 323 C1 ist ein Zugangskontrollsystem beschrieben, bei dem innerhalb des Fahrzeugs vier Positionen des Identifikationsgebers (vorne rechts, vorne links, hinten rechts, hinten links) unterschieden und die jeweilige Position angezeigt wird.

Bei einem aus der DE 199 41 351 A1 bekannten Zugangskontrollsystem werden fahrzeugseitig insbesondere dazu mehrere Antennen eingesetzt, die jeweilige Position der Identifikationseinrichtung zumindest im Wesentlichen unabhängig von deren lageabhängigen Abstrahlcharakteristik bestimmen zu können. Dabei wird aus dem Verhältnis der Signalstärken der jeweils an zwei beabstandeten Antennen ankommenden Antwortsignale der Identifikationseinrichtung auf die Position der Identifikationseinrichtung zwischen diesen Antennen geschlossen, wobei die Position auch in zwei oder drei Dimensionen unabhängig von der lageabhängigen Abstrahlcharakteristik bestimmt werden kann.

Der Erfindung liegt die Aufgabe zugrunde, ein verbessertes Komfort- und Zugangskontrollsystem der eingangs genannten Art zu schaffen, mit dem insbesondere eine optimalere Ortung der Identifikationseinrichtung möglich ist.

Diese Aufgabe wird erfindungsgemäß dadurch gelöst, dass die Mittel zur Auswertung von Empfangssignalen der Sende/ Empfangs-Antennen zudem dazu ausgeführt sind, für den Fall, dass sich die Identifikationseinrichtung innerhalb des Zugangsbereichs befindet, zu ermitteln, in welchem der verschiedenen Teilbereiche sich die Identifikationseinrichtung befindet, dass mittels der Steuereinrichtung die über die Sende/Empfangs-Antennen definierten unterschiedlichen Teilbereiche auf ein Display abgebildet werden und die jeweils ermittelte Position der Identifikationseinrichtung in einem dem jeweiligen Teilbereich entsprechenden Feld des Displays kenntlich gemacht wird, dass durch die Auswertemittel sowohl die horizontale Position als auch die vertikale Position der Identifikationseinrichtung ermittelt werden, dass mittels der Steuereinrichtung außer der horizontalen Position auch die vertikale Position der Identifikationseinrichtung auf dem Display darstellbar ist, und dass der kontrollierte Zugangsbereich durch den Innenraum eines Fahrzeuges gebildet und die Steuereinrichtung so ausgeführt ist, dass ein jeweiliger Motorstart nur zugelassen ist, wenn festgestellt wurde, dass sich die Identifikationseinrichtung in einem vorgebbaren Teilbereich des Fahrzeuginnenraumes befindet, wobei ein jeweiliger Motorstart nur zugelassen ist, wenn festgestellt wurde, dass sich die Identifikationseinrichtung in dem den Fahrersitz umfassenden Teilbereich des Fahrzeuginnenraumes befindet.

Aufgrund dieser Ausbildung ist mit dem Komfort- und Zugangskontrollsystem nunmehr auch eine Ortung der benutzerseitigen Identifikationseinrichtung in einem jeweiligen Teilbereich innerhalb des kontrollierten Zugangsbereiches wie beispielsweise des Innenraums eines Fahrzeuges möglich. Über vorgebbare, durch verschiedene innerhalb des kontrollierten Zugangsbereichs bzw. Fahrzeuges angeordnete Sende/Empfangs-Antennen erzeugte magnetische Felder und deren Beziehung relativ zueinander können verschiedene Teilbereiche innerhalb des kontrollierten Zugangsbereichs bzw. Fahrzeuges beispielsweise über spezifische Parameter definiert werden. Solche Parameter basieren beispielsweise auf den Beziehungen zwischen verschiedenen Antennenpaaren, dem Abstand zwischen einer jeweiligen Antenne und der Identifikationseinrichtung basierend auf RSSI-Werten und/oder dergleichen. Auf der Basis zumindest eines solchen Parameters kann dann ein Abbild der betreffenden Magnetfeldbeziehungen erzeugt werden.

Bei einer zweckmäßigen praktischen Ausführungsform des erfindungsgemäßen Komfort- und Zugangskontrollsystems sind die Empfangssignale der Sende/Empfangs-Antennen auf den Empfang von Signalen hin erzeugt, die von der Identifikationseinrichtung ausgesandt wurden.

Dabei sind die von der Identifikationseinrichtung ausgesandten Signale vorzugsweise von der zugangsseitigen Steuereinrichtung angeforderte Antwortsignale.

Vorteilhafterweise werden zur Ermittlung des die Identifikationseinrichtung enthaltenden Teilbereichs durch die Auswertemittel die Empfangssignale unterschiedlicher Sende/Empfangs-Antennen miteinander verglichen.

Von Vorteil ist insbesondere auch, wenn zur Ermittlung des die Identifikationseinrichtung enthaltenden Teilbereichs durch die Auswertemittel die Empfangssignale der beiden Sende/Empfangs-Antennen verschiedener Antennenpaare miteinander verglichen werden.

Eine weitere bevorzugte praktische Ausführungsform des erfindungsgemäßen Komfort- und Zugangskontrollsystems zeichnet sich dadurch aus, dass durch die Auswertemittel der Abstand zwischen der Identifikationseinrichtung und unterschiedlichen Sende/Empfangs-Antennen ermittelt und zur Ermittlung des die Identifikationseinrichtung enthaltenden Teilbereichs die Abstände zwischen der Identifikationseinrichtung und den unterschiedlichen Sende/Empfangs-Antennen miteinander verglichen werden.

Dabei werden durch die Auswertemittel die Abstände zwischen der Identifikationseinrichtung und den jeweiligen Sende/Empfangs-Antennen vorteilhafterweise auf der Basis von RSSI-Werten ermittelt.

In dem auch die horizontale Position der Identifikationseinrichtung ermittelt wird kann beispielsweise ermittelt werden, wo sich die Identifikationseinrichtung innerhalb einer vorgebbaren horizontalen Ebene befindet.

Vorteilhafterweise sind mittels der Steuereinrichtung die den unterschiedlichen Teilbereichen entsprechenden Felder auf dem Display innerhalb eines auf dem Display wiedergegebenen Umrisses des kontrollierten Zugangsbereiches darstellbar. Wie bereits erwähnt, kann es sich bei dem kontrollierten Zugangsbereich beispielsweise um den Innenraum eines Fahrzeuges handeln. In diesem Fall kann zur Darstellung des Fahrzeugumrisses der üblicherweise auf dem Display des Fahrzeug-Bordcomputers zur Anzeige offener Türen verwendete Fahrzeugumriss herangezogen werden.

Bevorzugt ist mittels der Steuereinrichtung die jeweils ermittelte horizontale Position der Identifikationseinrichtung in den Bereich innerhalb des auf dem Display wiedergegebenen Umrisses des kontrollierten Zugangsbereiches bzw. Fahrzeuges projizierbar.

In dem durch die Auswertemittel außer der horizontalen Position auch die vertikale Position oder Höhe der Identifikationseinrichtung ermittelt wird, kann beispielsweise der vertikale Abstand der Identifikationseinrichtung vom Boden des betreffenden Fahrzeuges ermittelt werden.

Gemäß einer zweckmäßigen praktischen Ausführungsform des erfindungsgemäßen Komfort- und Zugangskontrollsystems sind mittels der Steuereinrichtung bzw. deren Auswertemittel die horizontale Position und vertikale Position der Identifikationseinrichtung über eine dreidimensionale Abbildung darstellbar.

Vorteilhafterweise ist mittels der Steuereinrichtung außer der horizontalen Position auch die vertikale Position der Identifikationseinrichtung auf dem Display darstellbar.

Dabei kann die vertikale Position der Identifikationseinrichtung auf dem Display beispielsweise alpha-numerisch darstellbar sein.

Die Erfindung ist also beispielsweise bei schlüssellosen Komfort- und Zugangskontrollsystemen insbesondere für Fahrzeuge anwendbar, wobei zusätzlich das Merkmal einer Ortung der Identifikationseinrichtung verwirklicht ist.

Die Berechnung der Magnetfelder, die durch verschiedene, innerhalb des Fahrzeuges angeordnete Antennen erzeugt werden, wird auf optimale Weise für diese weitere Ortungsfunktion ausgenutzt. Über die Beziehung der Magnetfelder relativ zueinander können verschiedene Teilbereiche innerhalb des Fahrzeuges beispielsweise über spezifische Parameter definiert werden. Diese Parameter können beispielsweise auf Beziehungen zwischen verschiedenen Antennenpaaren, dem Abstand zwischen einer spezifischen Antenne und der Identifikationsvorrichtung basierend auf RSSI-Werten und/oder dergleichen basieren. Basierend auf wenigstens einem der genannten Parameter kann ein Abbild der Magnetfeldbeziehungen erzeugt werden.

Zur Visualisierung der ermittelten bzw. abgeschätzten Position der Identifikationseinrichtung kann der normalerweise auf dem Display des Fahrzeug-Bordcomputers erzeugte, zur Anzeige offener Türen verwendete Fahrzeugumriss mit herangezogen werden. In den Bereich innerhalb dieses Umrisses kann die berechnete horizontale Position der Identifikationseinrichtung projiziert werden. Außer dieser horizontalen Position kann auch die geschätzte oder ermittelte Höhe der Identifikationseinrichtung beispielsweise durch Text bzw. alpha-numerisch dargestellt werden.

Es ist eine dreidimensionale Abbildung der jeweiligen Positionen der Identifikationseinrichtung möglich. Insbesondere ausgehend von einer solchen dreidimensionalen Abbildung kann dann beispielsweise je nachdem, wo die Identifikationseinrichtung geortet wurde, ein Motorstart zugelassen oder verhindert werden. So ist beispielsweise ein Motorstart nur dann zugelassen, wenn die Identifikationseinrichtung sich in definierten Positionen befindet. So kann ein Motorstart insbesondere dann zugelassen sein, wenn sich die Identifikationseinrichtung im Bereich des Fahrersitzes befindet, während ein Motorstart untersagt wird, wenn die Identifikationseinrichtung in irgendeinem anderen Teilbereich erfasst wird.

## Patentansprüche

1. Komfort- und Zugangskontrollsystem insbesondere für Fahrzeuge, mit einer zugangsseitigen elektronischen Steuereinrichtung, einer benutzerseitigen Identifikationseinrichtung und der zugangsseitigen elektronischen Steuereinrichtung und der benutzerseitigen Identifikationseinrichtung zugeordneten Antennen für eine drahtlose bidirektionale Kommunikation zwischen der Steuereinrichtung und der Identifikationseinrichtung, wobei innerhalb des kontrollierten Zugangsbereiches bzw. Fahrzeuges mehrere an unterschiedlichen Stellen angeordnete, mit der elektronischen Steuereinrichtung verbundene Sende/ Empfangs-Antennen vorgesehen sind, über die mehrere unterschiedliche Teilbereiche innerhalb des kontrollierten Zugangsbereichs definierbar sind, und die Steuereinrichtung Mittel zur Auswertung von Empfangssignalen der Sende/Empfangs-Antennen umfasst, durch die die Position der Identifikationseinrichtung ermittelt wird und mittels derer die Position der Identifikationseinrichtung auf einem Display darstellbar ist,
**dadurch gekennzeichnet,**
**dass** die Mittel zur Auswertung von Empfangssignalen der Sende/Empfangs-Antennen zudem dazu ausgeführt sind, für den Fall, dass sich die Identifikationseinrichtung innerhalb des Zugangsbereichs befindet, zu ermitteln, in welchem der verschiedenen Teilbereiche sich die Identifikationseinrichtung befindet,
**dass** mittels der Steuereinrichtung die über die Sende/Empfangs-Antennen definierten unterschiedlichen Teilbereiche auf ein Display abgebildet werden und die jeweils ermittelte Position der Identifikationseinrichtung in einem dem jeweiligen Teilbereich entsprechenden Feld des Displays kenntlich gemacht wird,
**dass** durch die Auswertemittel sowohl die horizontale Position als auch die vertikale Position der Identifikationseinrichtung ermittelt werden,
**dass** mittels der Steuereinrichtung außer der horizontalen Position auch die vertikale Position der Identifikationseinrichtung auf dem Display darstellbar ist, und
**dass** der kontrollierte Zugangsbereich durch den Innenraum eines Fahrzeuges gebildet und die Steuereinrichtung so ausgeführt ist, dass ein jeweiliger Motorstart nur zugelassen ist, wenn festgestellt wurde, dass sich die Identifikationseinrichtung in einem vorgebbaren Teilbereich des Fahrzeuginnenraumes befindet,
wobei ein jeweiliger Motorstart nur zugelassen ist, wenn festgestellt wurde, dass sich die Identifikationseinrichtung in dem den Fahrersitz umfassenden Teilbereich des Fahrzeuginnenraumes befindet.

2. System nach Anspruch 1,
**dadurch gekennzeichnet,**
**dass** die Empfangssignale der Sende/Empfangs-Antennen auf den Empfang von Signalen hin erzeugt sind, die von der Identifikationseinrichtung ausgesandt wurden.

3. System nach Anspruch 2,
**dadurch gekennzeichnet,**
**dass** die von der Identifikationseinrichtung ausgesandten Signale von der zugangsseitigen Steuereinrichtung angeforderte Antwortsignale sind.

4. System nach einem der vorhergehenden Ansprüche,
**dadurch gekennzeichnet ,**
**dass** zur Ermittlung des die Identifikationseinrichtung enthaltenden Teilbereichs durch die Auswertemittel die Empfangssignale unterschiedlicher Sende/Empfangs-Antennen miteinander verglichen werden.

5. System nach Anspruch 4,
**dadurch gekennzeichnet,**
**dass** zur Ermittlung des die Identifikationseinrichtung enthaltenden Teilbereichs durch die Auswertemittel die Empfangssignale der beiden Sende/Empfangs-Antennen verschiedener Antennenpaare miteinander verglichen werden.

6. System nach einem der vorhergehenden Ansprüche,
**dadurch gekennzeichnet,**
**dass** durch die Auswertemittel der Abstand zwischen der Identifikationseinrichtung und unterschiedlichen Sende/Empfangs-Antennen ermittelt und zur Ermittlung des die Identifikationseinrichtung enthaltenden Teilbereichs die Abstände zwischen der Identifikationseinrichtung und den unterschiedlichen Sende/Empfangs-Antennen miteinander verglichen werden.

7. System nach Anspruch 5,
**dadurch gekennzeichnet,**
**dass** durch die Auswertemittel die Abstände zwischen der Identifikationseinrichtung und den jeweiligen Sende/Empfangs-Antennen auf der Basis von RSSI-Werten ermittelt werden.

8. System nach einem der vorhergehenden Ansprüche,
**dadurch gekennzeichnet,**
**dass** mittels der Steuereinrichtung die den unterschiedlichen Teilbereichen entsprechenden Felder auf dem Display innerhalb eines auf dem Display wiedergegebenen Umrisses des kontrollierten Zugangsbereiches darstellbar sind.

9. System nach Anspruch 8,
**dadurch gekennzeichnet,**
**dass** mittels der Steuereinrichtung die jeweils ermittelte horizontale Position der Identifikationseinrichtung in den Bereich innerhalb des auf dem Display wiedergegebenen Umrisses des kontrollierten Zugangsbereiches projizierbar ist.

10. System nach einem der vorhergehenden Ansprüche,
**dadurch gekennzeichnet,**
**dass** die vertikale Position der Identifikationseinrichtung auf dem Display alpha-numerisch darstellbar ist.

11. System nach einem der vorhergehenden Ansprüche,
**dadurch gekennzeichnet,**
**dass** mittels der Steuereinrichtung bzw. deren Auswertemittel die horizontale Position und vertikale Position der Identifikationseinrichtung über eine dreidimensionale Abbildung darstellbar sind.

## Claims

1. Comfort and access control system in particular for vehicles, having an access-side electronic control device, a user-side identification device and antennas associated with the access-side electronic control device and the user-side identification device for a wireless bidirectional communication between the control device and the identification device, wherein several transmission/reception antennas are arranged at different locations within the controlled access area or vehicle and connected with the electronic control device, through which several different subareas are definable within the controlled access area, and the control device includes means for evaluation of received signals of the transmission/reception antennas, whereby the position of the identification device is determined and whereby the position of the identification device is presentable on a display,
**characterized in that**
the means for evaluation of received signals of the transmission/reception antennas are further arranged to determine, in the case that the identification device is located within the access area, in which of the various subareas the identification device is located,
by means of the control device, the various subareas, defined by the transmission/reception antennas, are displayed on a display and the respective determined position of the identification device is identified in a field of the display corresponding to the respective subarea,
the evaluation means determines both the horizontal position and the vertical position of the identification device,
aside from the horizontal position also the vertical position of the identification device is presentable on the display by means of the control device, and
the controlled access area consists of the interior of a vehicle and the control device is arranged such that a respective engine start is enabled only if it is determined that the identification device is located in a predetermined subarea of the vehicle interior,
wherein a respective engine start is enabled only if it is determined that the identification device is located in the subarea of the vehicle interior including the driver seat.

2. System according to claim 1,
**characterized in that**
the received signals of the transmission/reception antennas are generated following the reception of signals emitted from the identification device.

3. System according to claim 2,
**characterized in that**
the signals emitted from the identification device are return signals requested from the access-side control device.

4. System according to one of the preceding claims,
**characterized in that**
the received signals of different transmission/reception antennas are compared with one another by the evaluation means for determination of the subarea comprising the identification device.

5. System according to claim 4,
**characterized in that**
the received signals of the two transmission/reception antennas of different pairs of antennas are compared with one another by the evaluation means for determination of the subarea comprising the identification device.

6. System according to one of the preceding claims,
**characterized in that**
the distance between the identification device and different transmission/reception antennas is determined by the evaluation means and the distances between the identification device and the different transmission/reception antennas are compared with one another for determination of the subarea comprising the identification device.

7. System according to claim 5,
**characterized in that**
the distances between the identification device and the respective transmission/reception antennas are determined by the evaluation means based on RSSI values.

8. System according to one of the preceding claims,
**characterized in that**
by means of the control device, the fields corresponding to the different subareas are presentable on the display within an outline of the controlled access area shown on the display.

9. System according to claim 8,
**characterized in that**
by means of the control device, the respective determined horizontal position of the identification device is projectable in the area within the outline of the controlled access area shown on the display.

10. System according to one of the preceding claims,
**characterized in that**
the vertical position of the identification device is alphanumerically presentable on the display.

11. System according to one of the preceding claims,
**characterized in that**
by means of the control device and its evaluation means, respectively, the horizontal position and the vertical position of the identification device are presentable using a three-dimensional image.

## Revendications

1. Système de contrôle de confort et d'accès, en particulier pour véhicules automobiles, comprenant un moyen de commande électronique côté accès, un moyen d'identification côté utilisateur, ainsi que des antennes associées au moyen de commande électronique côté accès et au moyen d'identification côté utilisateur pour une communication sans fil bidirectionnelle entre le moyen de commande et le moyen d'identification, dans lequel, à l'intérieur de la zone à accès contrôlé, ou du véhicule, il est prévu plusieurs antennes émettrices/réceptrices agencées à différents emplacements et connectées au moyen de commande électronique, via lesquelles plusieurs zones partielles différentes peuvent être définies à l'intérieur de la zone à accès contrôlé, et le moyen de commande comprend des moyens pour évaluer des signaux de réception des antennes émettrices/réceptrices, grâce auxquels la position du moyen d'identification est déterminée, et au moyen desquels la position du moyen d'identification peut être représentée sur un affichage,
**caractérisé en ce que** les moyens pour évaluer des signaux de réception des antennes émettrices/réceptrices sont en outre réalisés, dans le cas où le moyen d'identification se trouve à l'intérieur de la zone d'accès, afin de déterminer dans laquelle des différentes zones partielles se trouve le moyen d'identification,
**en ce que** les différentes zones partielles définies via les antennes émettrices/réceptrices peuvent être représentées sur un affichage au moyen du moyen de commande et la position respectivement déterminée du moyen d'identification est rendue reconnaissable dans un champ de l'affichage correspondant à la zone partielle respective,
**en ce que**, au moyen du moyen de commande il est possible de représenter, outre la position horizontale, également la position verticale du moyen d'identification sur l'affichage, et
**en ce que** la zone à accès contrôlé est formée par l'habitacle d'un véhicule automobile, et le moyen de commande est ainsi réalisé qu'un démarrage respectif du moteur n'est autorisé que lorsqu'on a constaté que le moyen d'identification se trouve dans une zone partielle prédéterminée de l'habitacle du véhicule,
et de sorte qu'un démarrage respectif du moteur n'est autorisé que lorsqu'on a constaté que le moyen d'identification se trouve dans la zone partielle de l'habitacle du véhicule qui inclut le siège du conducteur.

2. Système selon la revendication 1,
**caractérisé en ce que** les signaux de réception des antennes émettrices/réceptrices sont engendrés à la réception de signaux qui ont été émis par le moyen d'identification.

3. Système selon la revendication 2,
**caractérisé en ce que** les signaux émis par le moyen d'identification sont des signaux de réponse demandés par le moyen de commande côté accès.

4. Système selon l'une des revendications précédentes,
**caractérisé en ce que**, pour déterminer la zone partielle qui contient le moyen d'identification, les signaux de réception provenant de différentes antennes émettrices/réceptrices sont comparés les uns aux autres par le moyen d'évaluation.

5. Système selon la revendication 4,
**caractérisé en ce que**, pour déterminer la zone partielle qui contient le moyen d'identification, les signaux de réception des deux antennes émettrices/réceptrices de différentes paires d'antennes sont comparés les uns aux autres par le moyen d'évaluation.

6. Système selon l'une des revendications précédentes,
**caractérisé en ce que** les distances entre le moyen d'identification et différentes antennes émettrices/réceptrices sont déterminées par le moyen d'évaluation et, pour déterminer la zone partielle qui contient le moyen d'identification, les distances entre le moyen d'identification et les différentes antennes émettrices/réceptrices sont comparées les unes aux autres.

7. Système selon la revendication 5,
**caractérisé en ce que** les distances entre le moyen d'identification et les antennes émettrices/réceptrices respectives sont déterminées en se basant sur des valeurs RSS-I.

8. Système selon l'une des revendications précédentes,
**caractérisé en ce que**, au moyen du moyen de commande, il est possible de représenter les champs correspondants aux différentes zones partielles sur l'affichage à l'intérieur d'un contour de la zone à accès contrôlé, reproduit sur l'affichage.

9. Système selon la revendication 8,
**caractérisé en ce que**, au moyen du moyen de commande, la position horizontale respectivement déterminée du moyen d'identification peut être projetée dans la zone à l'intérieur du contour de la zone à accès contrôlé, reproduit sur l'affichage.

10. Système selon l'une des revendications précédentes,
**caractérisé en ce que** la position verticale du moyen d'identification peut être illustrée sur l'affichage de manière alphanumérique.

11. Système selon l'une des revendications précédentes,
**caractérisé en ce que**, au moyen du moyen de commande ou respectivement de ses moyens d'évaluation, la position horizontale et la position verticale du moyen d'identification peuvent être représentées sur une représentation tridimensionnelle.
